(19) Europäisches Patentamt
European Patent Office
Office européen des brevets

(11) EP 3 710 530 B1

(12) **EUROPEAN PATENT SPECIFICATION**

(45) Date of publication and mention of the grant of the patent:
**22.12.2021 Bulletin 2021/51**

(21) Application number: **18796455.6**

(22) Date of filing: **05.11.2018**

(51) Int Cl.:
***C08L 23/08*** *(2006.01)* ***C08L 23/12*** *(2006.01)*

(86) International application number:
**PCT/EP2018/080090**

(87) International publication number:
**WO 2019/091885 (16.05.2019 Gazette 2019/20)**

(54) **COMPOSITIONS OBTAINED FROM RECYCLED POLYOLEFINS**

AUS RECYCELTEN POLYOLEFINEN ERHALTENE ZUSAMMENSETZUNGEN

COMPOSITIONS OBTENUES À PARTIR DE POLYOLÉFINES RECYCLÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2017 EP 17201375**

(43) Date of publication of application:
**23.09.2020 Bulletin 2020/39**

(73) Proprietor: **Basell Poliolefine Italia S.r.l.**
**20121 Milano (IT)**

(72) Inventors:
- **DE PALO, Roberto**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 062 937**
**WO-A1-97/20888**
**WO-A1-2016/005301**
**WO-A1-2016/070416**

EP 3 710 530 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present disclosure relates to compositions obtained from recycled polyolefins containing a composition comprising propylene-base polymers and linear low-density polyethylene (LLDPE) as compatibilizer.

BACKGROUND OF THE INVENTION

Polyolefins, in particular polyethylene and polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

One of the key problems in polyolefin recycling, especially when dealing with material streams from post-consumer waste (PCW) is the difficulty to quantitatively separate polypropylene (PP) and polyethylene (PE). Commercial recyclates from PCW sources have been found generally to contain mixtures of PP and PE, the minor component reaching up to < 50 wt%.

Such recycled PP/PE-blends normally suffer from deteriorated mechanical and optical properties, have poor performance in odour and taste and they generally suffer from poor compatibility between the main polymer phases, resulting in both limited impact strength and heat deflection resistance. Such inferior performance is partly caused by PE with its lower stiffness and melting point forming the continuous phase even at PP concentrations up to 65% because of the normally higher viscosity of the PE components in PCW.

These drawbacks normally exclude the application for high quality parts, and it only allows the use in low-cost and non-demanding applications.

Some research has been done to improve the compatibility between PP and PE. According to Wei Zhu et al.; Journal of Applied Polymer Science, Vol. 58, p. 515-521 (1995) the addition of ethylene - propylene copolymer as compatibilizer to blends of polypropylene and polyethylene can remedy the situation of high incompatibility to some extent and that ethylene-propylene rubber (EPR) or ethylene-propylene-diene rubber (EPDM) can substantially improve the toughness of the blends, but at the expense of deteriorated moduli and tensile strength.

WO2013075241 A1 also discloses a method of using ethylene-propylene-diene rubber (EPDM) or a random ethylene-propylene copolymer (EP-RACO) as compatibilizer for the recycling plastic blends.

It has now been found that a composition comprising propylene-base polymers and linear low-density polyethylene (LLDPE) can be used as compatibilizer for this mixture allowing better properties especially for the production of films.

SUMMARY OF THE INVENTION

The present disclosure relates to polyolefin compositions comprising:

T1) 70-95wt%, of a polyolefin component containing:

a1) from 30 wt% to 70 wt% of a propylene based polymer having a propylene content higher than 60 wt%
a2) from 30 wt% to 70 wt% of an ethylene based polymer having an ethylene content higher than 70;

the sum of the amount of a1) and a2), being referred to the total weight of a1) and a2), being 100;
T2) 5-30 wt% of a polyolefin component containing:

A) 5-35% by weight of a propylene homopolymer or a propylene ethylene copolymer containing 90% by weight or more of propylene units; component A) containing 10% by weight or less of a fraction soluble in xylene at 25°C (XSA), both the amount of propylene units and of the fraction XSA being referred to the weight of A);
B) 20-50% by weight; of a copolymer of ethylene and a C3-C8 alpha-olefin containing from 0.1% to 20% by weight of alpha-olefin units and containing 25% by weight or less; of a fraction soluble in xylene at 25°C (XSB), both the amount of alpha-olefin units and of the fraction XSB being referred to the weight of (B); and

C) 30-60% by weight of a copolymer of ethylene and propylene containing from 25% to 75% by weight of ethylene units and containing from 40% to 95% by weight of a fraction soluble in xylene at 25°C (XSC), both the amount of ethylene units and of the fraction XSC being referred to the weight of (C);

the sum of the amounts of (A), (B) and (C) being referred to the total weight of (A) , (B) and (C), being 100; the sum of the amount of T1) and T2), being referred to the total weight of T1) and T2), being 100.

DETAILED DESCRIPTION OF THE INVENTION

The present disclosure relates to polyolefin compositions comprising:

T1)70-95 wt%, preferably 75-90 wt%; more preferably from 77 wt% to 85 wt% of a polyolefin component containing:

a1) from 30 wt% to 70 wt% preferably from 40 wt % to 60 wt% more preferably from 45 wt% to 55 wt% of a propylene based polymer having a propylene content higher than 60 wt %; preferably higher than 70 wt%; more preferably higher than 80 wt% and even more preferably higher than 90 wt%;
a2) from 30 wt% to 70 wt% preferably from 40 wt % to 60 wt% more preferably from 45 wt% to 55 wt% of an ethylene based polymer having an ethylene content higher than 70 preferably higher than 75 wt%; more preferably higher than 80 wt% even more preferably higher than 90 wt%;
the sum of the amount of a1) and a2), being referred to the total weight of a1) and a2), being 100;

T2) 5-30 wt% preferably 10-25 wt%; more preferably from 15 wt% to 23 wt% of a polyolefin component containing:

A) 5-35% by weight; preferably 10-30 % by weight; more preferably 15-23% by weight of a propylene homopolymer containing or a propylene ethylene copolymer containing 90% by weight or more preferably 95 % by weight or more; preferably 97% by weight or more of propylene units; component A) containing 10% by weight or less preferably 8 wt% or less more preferably 6 wt% or less of a fraction soluble in xylene at 25°C ($XS_A$), both the amount of propylene units and of the fraction $XS_A$ being referred to the weight of A);
B) 20-50% by weight; preferably 25-45% by weight; more preferably 30-40% by weight of a copolymer of ethylene and a $C_3$-$C_8$ alpha-olefin containing from 0.1% to 20% by weight; preferably from 5% to 15% by weight; more preferably from 7% to 12% by weight of alpha-olefin units and containing 25% by weight or less; preferably from 20% by weight or less; preferably 17% by weight or less of a fraction soluble in xylene at 25°C ($XS_B$), both the amount of alpha-olefin units and of the fraction $XS_B$ being referred to the weight of (B); and
C) 30-60% by weight; preferably 35-55% by weight; more preferably 40-50% by weight of a copolymer of ethylene and propylene containing from 25% to 75% by weight; preferably from 37% to 65% by weight; more preferably from 45% to 58% by weight of ethylene units and containing from 40% to 95% by weight of a fraction soluble in xylene at 25°C (XSc), both the amount of ethylene units and of the fraction XSc being referred to the weight of (C);

the sum of the amounts of (A), (B) and (C) being referred to the total weight of (A) , (B) and (C), being 100; the sum of the amount of T1) and T2), being referred to the total weight of T1) and T2), being 100; the polyolefin composition can be advantageously used for the production of films, including cast, blown and bioriented films mono or multilayer with a reduction of gels number in the films.

Component T1) is preferably a mixture of recycled polypropylene and polyethylene blend.

More preferably component a1) is propylene homopolymer containing from 0 to 5 wt% of comonomers being olefin derived units, preferably alpha-olefin derived units having from 2 to 10 carbon atoms such as ethylene, 1-butene, 1-hexene and 1-octene derived units; ethylene being preferred, more preferably propylene homopolymer is used.

More preferably component a2) is an ethylene homo or copolymer containing from 0 to 20 wt% of comonomers being olefin derived units, preferably alpha olefins derived units having from 3 to 10 carbon atoms such as propylene, 1-butene, 1-hexene and 1-octene derived units; 1-butene and 1-hexene being preferred.

In the component T2) component (A) preferably has the melt flow rate (230°C/2.16 kg) ranging between 50 and 200 g/10 min; more preferably between 80 and 170 g/10 min.

Components (A)+ (B) blended together have the melt flow rate (230°C/2.16 kg) comprised between 0.1 and 70 g/10 min. preferably between 1 and 50 g/10 min; more preferably between 8 and 40 g/10 min.

Preferably component B) has a density (determined according to ISO 1183 at 23°C) of from 0.940 to 0.965 g/cm$^3$. Component B) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene

1-hexene and 1-octene being preferred; 1-butene being the most preferred.

Preferably the polyolefin composition T2) has a melt flow rate (230°C/2.16 kg) comprised between 0.5 to 25 g/10min preferably from 0.8 to 20.0g/10min; even more preferably from 1.0 to 18.0g/10min.

Preferably the polyolefin composition T2) has an intrinsic viscosity [η] (measured in tetrahydronaphthalene at 135 °C) of the xylene soluble fraction at 25°C comprised between 1.5 to 4.0 dl/g preferably the intrinsic viscosity is comprised between 2.0 and 3.5 dl/g; more preferably the intrinsic viscosity is comprised between 2.1 and 2.8 dl/g.

For the present disclosure, the term "copolymer" comprises polymers containing two kinds of comonomers, such as propylene and ethylene or ethylene and 1-butene.

It has been found that the polyolefin composition T2) can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus in a preferred embodiment, the polymer composition B) of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

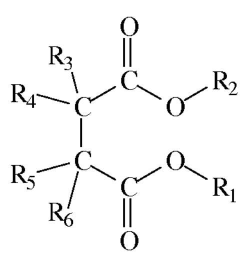

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1_aR^2_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si($OCH_3$)$_2$, (cyclohexyl)(methyl)Si ($OCH_3$)$_2$, (phenyl)$_2$Si($OCH_3$)$_2$ and (cyclopentyl)$_2$Si($OCH_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The following examples are given in order to illustrate.

## EXAMPLES

## CHARACTERIZATIONS

### Xylene-soluble (XS) Fraction at 25 °C

Solubility in xylene: Determined as follows:
2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components B) and C) have been calculated by using the formula:
$XS_{tot}=WaXS_A+WbXS_B+WcXS_c$
wherein Wa, Wb and Wc are the relative amount of components A, B and C, respectively, and (A+B+C=1).

### Melt Flow Rate (MFR)

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Comonomer ($C_2$ and $C_4$) Content**

The content of comonomers was determined by infrared (IR) spectroscopy by collecting the IR spectrum of the sample vs. an air background with a Fourier transform infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about 1 g of sample between two aluminum foil sheets. A small portion was cut from the resulting sheet to mold a film. The film thickness was set in order to have a maximum absorbance of the $CH_2$ absorption band at -720 $cm^{-1}$ of 1.3 a.u. (% Transmittance > 5%). The molding conditions were carried out at a temperature of about 180 $\pm$ 10 °C (356 °F) and a pressure of about 10 $kg/cm^2$ (142.2 psi) for about one minute. The pressure was then released, the sample was removed from the press and cooled to room temperature. The spectrum of the pressed film sample was recorded as a function of absorbance vs. wavenumbers ($cm^{-1}$). The following measurements were used to calculate ethylene ($C_2$) and 1-butene ($C_4$) contents:

a) Area ($A_t$) of the combination absorption bands between 4482 and 3950 $cm^{-1}$, which is used for spectrometric normalization of film thickness.
b) Area ($A_{C2}$) of the absorption band due to methylenic sequences ($CH_2$ rocking vibration) in a range of 660-790 $cm^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum: The reference spectrum is obtained by performing a digital subtraction of a linear polyethylene from a $C_2C_4$ copolymer in order to extract the $C_4$ band (ethyl group at -771 $cm^{-1}$).

The ratio $A_{C2}/A_t$ is calibrated by analyzing ethylene-propylene standard copolymers of known compositions, as determined by NMR spectroscopy.
The assignments of the spectra, triad distribution and composition were made according to Kakugo ("Carbon-13 NMR determination of monomer sequence distribution in ethylene-propylene copolymers prepared with $\delta$-titanium trichloride- diethylaluminum chloride," M. Kakugo, Y. Naito, K. Mizunuma and T. Miyatake, Macromolecules, 1982, 15, 1150).
In order to calculate the ethylene ($C_2$) and 1-butene ($C_4$) content, calibration curves were obtained by using samples of known amounts of ethylene and 1-butene that were detectable by $^{13}C$ NMR.
Calibration for ethylene - A calibration curve was obtained by plotting $A_{C2}/A_t$ versus ethylene molar percent ($\%C_{2m}$), and the coefficients $a_{C2}$, $b_{C2}$ and $c_{C2}$ were then calculated via linear regression.
Calibration for 1-butene — A calibration curve was obtained by plotting $FCR_{C4}/A_t$ versus butane molar percent ($\%C_4m$), and the coefficients $a_{C4}$, $b_{C4}$ and $C_{C4}$ were then calculated via linear regression.
The spectra of the unknown samples are recorded and then (At), ($A_{C2}$) and ($FCR_{C4}$) of the unknown sample are calculated.
The ethylene content (% molar fraction $C_{2m}$) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction $C_{4m}$) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

where $a_{C4}$, $b_{C4}$, $c_{C4}$, $a_{C2}$, $b_{C2}$, $c_{C2}$ are the coefficients of the two calibrations.

Changes from mol% to wt% are calculated by using molecular weights of the compound(s).

Amount (wt%) of comonomer of components A-C are calculated by using the following relationship:

$$Com_{tot}=WaCom_A+WbCom_B+WcCom_C$$

wherein Wa, Wb and Wc are the relative amount of components A, B and C, respectively, and (A+B+C=1).

$Com_{tot}$, $Com_A$, $Com_B$ and ComC are the amounts of comonomer in the total composition (tot) and in components A-C.

Preparation of component T2

Catalyst system and prepolymerization:

Before introducing it into the polymerization reactors, the solid catalyst component described above was contacted at 30 °C for 9 minutes with aluminum triethyl (TEAL) and dicyclopentyldimethoxysilane (DCPMS) at a TEAL/DCPMS weight ratio of about 15 and in such a quantity that the TEAL/solid catalyst component weight ratio was about 4.

The catalyst system was then subjected to prepolymerization by maintaining it in a liquid propylene suspension at 50 °C for about 75 minutes before introducing it into the first polymerization reactor.

Polymerization

The polymerization was carried out in continuous mode in a series of three gas-phase reactors equipped with devices to transfer the product from the first reactor to the second one. A propylene-based polymer (A) was produced in the first gas phase polymerization reactor by feeding the prepolymerized catalyst system, hydrogen the molecular weight regulator) and propylene, all in the gas state, in a continuous and constant flow. The propylene-based polymer (A) coming from the first reactor was discharged in a continuous flow and, after having been purged of unreacted monomers, was introduced, in a continuous flow, into the second gas phase reactor, together with quantitatively constant flows of hydrogen and ethylene, all in the gas state. In the second reactor a copolymer of ethylene (B) was produced. The product coming from the second reactor was discharged in a continuous flow and, after having been purged of unreacted monomers, is introduced, in a continuous flow, into the third gas phase reactor, together with quantitatively constant flows of hydrogen, ethylene and propylene, all in the gas state. In the third reactor an ethylene-propylene polymer (C) was produced. Polymerization conditions, molar ratio of the reactants and compositions of the resulting copolymers are shown in Table 1. The polymer particles exiting the third reactor were subjected to a steam treatment to remove the reactive monomers and volatile substances and then dried. Thereafter the polymer particles were mixed with a stabilizing additive composition in a twin screw extruder Berstorff ZE 25 (length/diameter ratio of screws: 34) and extruded under a nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition comprised the following components:

- 0.1% by weight of Irganox® 1010;
- 0.1% by weight of Irgafos® 168; and
- 0.04% by weight of DHT-4A (hydrotalcite);

where all percentage amounts refer to the total weight of the polymer and stabilizing additive composition.

Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, and Irgafos® 168 is tris(2,4-di-tert.-butylphenyl)phosphite. The characteristics of the polymer composition, reported in Table 2, are obtained from measurements carried out on the extruded polymer, which constitutes the stabilized ethylene polymer composition according to certain embodiments disclosed herein.

Table 1 - Polymerization conditions

| Example | | 1 |
|---|---|---|
| 1st Reactor - component (A) | | |
| Temperature | °C | 60 |
| Pressure | barg | 16 |
| $H_2/C_3$- | mol. | 0.24 |
| Split | wt% | 22 |
| Xylene soluble of (A) ($XS_A$) | wt% | 4.2 |
| MFR of (A) | g/10 min | 110 |
| 2nd Reactor - component (B) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of B * | wt% | 90 |
| $C_4$- content of B * | wt% | 10 |
| Xylene soluble of B ($XS_B$) * | wt% | 16.0 |
| Xylene soluble of (A + B) | wt% | 12.0 |
| MFR of (A + B) | g/10 min. | 35.9 |
| 3rd Reactor — component (C) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of C * | wt% | 52 |
| Xylene soluble of (C) (XSc)* | wt% | 83 |
| Notes: $C_2$- = ethylene (IR); $C_3$- = propylene (IR); $C_4$- = 1-butene (IR); split = amount of polymer produced in the concerned reactor. * Calculated values. | | |

The features of the polymer of Example 1 are reported in Table 2

Table 2

| Example | | 1 |
|---|---|---|
| component A | | |
| $C_2$ content | wt% | 0 |
| XSA | wt% | 4.2 |
| MFR | g/10 min | 110 |
| split | wt% | 22 |
| component B | | |
| XSB* | wt% | 16 |
| $C_2$ content* | wt% | 90.0 |
| $C_4$ content* | wt% | 10.0 |
| split | wt% | 32 |
| MFR of (A + B) | g/10 min | 35.9 |
| Component C | | |
| XSC* | wt% | 83 |
| $C_2$ content* | wt% | 52 |
| split | wt% | 46 |
| total composition | | |
| MFR | g/10 min | 1.61 |
| IV on soluble in Xylene | dl/g | 2.4 |
| $C_2$ = ethylene; $C_4$ = 1-butene;<br>* calculated | | |

**Production of T1 component**

In order to simulate the waste recycled polyolefin composition a blend of 50 wt% of hostalen GF 9055 F a commercial high density polyethylene sold by LyondellBasell and 50 wt% of Moplen HP561R a polypropylene homopolymer sold by LyondellBasell has been obtained.

T1 component has been blended with various propylene based copolymers and a cast film has bene obtained with the resulting composition the compositions and the gel number of the film are reported in table 3

Table 3

| Ex | | Comp 1 | Ex 2 | Comp 3 | Comp 4 | Comp 5 |
|---|---|---|---|---|---|---|
| T1 | Wt% | 100 | 80 | 80 | 80 | 80 |
| T2: | | | 20 | | | |
| Adflex X500F | Wt% | 0 | | 20 | | |
| *Clyrell* Rc1890 | Wt% | 0 | | | 20 | |
| Hifax x1956A | Wt% | 0 | | | | 20 |
| Gel number <200 mu | $1/m^2$ | 728 | 48 | 77 | 75 | 851 |

Adflex X500F is an heterophasic composition sold by LyondellBasell typically used in co-extruded cast film and injection moulding applications

*Clyrell* RC1890 is a polypropylene random copolymer sold by LyondellBasell

*Hifax* X 1956 A is a heterophasic TPO (thermoplastic polyolefin) polypropylene grade sold by LyondellBasell

The gels count test has been carried out on a cast film Collin Extrusion line diameter with a 25 mm single screw with the following features:

Single screw L/D 25
Temperature profile
Cylinders 200 (close to the hopper) -> 230°C (at the end of the extruder, before the inlet to the die)
Die 240°C
Die width 150 mm
Chill roll 30°C
Film speed 3.0 m/min
Film thickness 50 micron
Inspected area 1 m2
OCS FS5 gel count unit on a 4 cm wide stripe

The elongation at break of cast films of examples 1-3 have been measured, in machine direction (MD) and trasversal direction (TD) according to ASTM D 882, in table 2. The fact that for example 2 the values of elongation at break in the two direction is comparable is an indicator that the blend has been compatibilized.

Table 2

| | Elongation at break MD % | Elongation at break TD % |
|---|---|---|
| Comp ex 1 | 1110 | 7 |
| Ex2 | 1130 | 1000 |
| Comp ex 3 | 1190 | 7 |

**Claims**

**1.** A polyolefin composition comprising:

T1) 70-95wt%, of a polyolefin component containing:

a1) from 30 wt% to 70 wt% of a propylene based polymer having a propylene content higher than 60 wt%
a2) from 30 wt% to 70 wt% of an ethylene based polymer having an ethylene content higher than 70;

the sum of the amount of a1) and a2), being referred to the total weight of a1) and a2), being 100;
T2) 5-30 wt% of a polyolefin component containing:

A) 5-35% by weight of a propylene homopolymer or a propylene ethylene copolymer containing 90% by weight or more of propylene units; component A) containing 10% by weight or less of a fraction soluble in xylene at 25°C ($XS_A$), both the amount of propylene units and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);

the sum of the amounts of (A), (B) and (C) being referred to the total weight of (A) , (B) and (C), being 100;
the sum of the amount of T1) and T2), being referred to the total weight of T1) and T2), being 100.

**2.** The polyolefin compositions according to claim 1 wherein:

Component A ranges from 10 % by weight to 30 % by weight;
Component B ranges from 25 % by weight to 45 % by weight; and

Component C ranges from 35 % by weight to 55 % by weight;

**3.** The polyolefin compositions according to claims 1 or 2 wherein

Component A ranges from 15 % by weight to 25 % by weight;
Component B ranges from 30 % by weight to 40 % by weight; and
Component C ranges from 40 % by weight to 50 % by weight; and

**4.** polyolefin compositions according to anyone of claims 1-3 wherein component A) is a polypropylene homopolymer

**5.** The polyolefin compositions according to anyone of claims 1-4 wherein component B) is a copolymer of ethylene and a $C_3$-$C_8$ alpha-olefin containing from 5% to 15 % by weight of alpha-olefin units.

**6.** The polyolefin compositions according to anyone of claims 1-5 wherein component C) is a copolymer of ethylene and propylene containing from 37% to 65% by weight of ethylene units.

**7.** The polyolefin compositions according to anyone of claims 1-6 wherein component (A) has the melt flow rate (230°C/2.16 kg) ranging between 50 and 200 g/10 min;

**8.** The polyolefin compositions according to anyone of claims 1-7 wherein component (B) has the melt flow rate (230°C/2.16 kg) ranging between 0.1 and 70 g/10 min;

**9.** The polyolefin compositions according to anyone of claims 1-8 wherein the polyolefin composition has a melt flow rate (230°C/2.16 kg) comprised between 0.5 to 25 g/10m;

**10.** The polyolefin compositions according to anyone of claims 1-9 wherein component a1) ranges from 45 wt% to 55 wt% and component a2) from 40 wt % to 60 wt.

**11.** The polyolefin compositions according to anyone of claims 1- 10 wherein component T1) is a mixture of recycled polypropylene and polyethylene blend.

**12.** The polyolefin compositions according to anyone of claims 1-11 wherein component a1) is propylene homopolymer containing from 0 to 5 wt% of comonomers being olefin derived units.

**13.** The polyolefin compositions according to anyone of claims 1-12 wherein a2) is an ethylene homo or copolymer containing from 0 to 20 wt% of comonomers being olefin derived units.

**14.** A film comprising the polyolefin compositions of claims 1-13.

**15.** The film according to claim 14 being a cast, blown or bioriented films, mono or multilayer.

**Patentansprüche**

**1.** Polyolefinzusammensetzung, umfassend:

T1) 70 bis 95 Gew.% einer Polyolefinkomponente, welche folgendes enthält:

a1) 30 Gew.% bis 70 Gew.% eines Polymers auf Propylenbasis mit einem Propylengehalt höher als 60 Gew.%;
a2) 30 Gew.% bis 70 Gew.% eines Polymers auf Ethylenbasis mit einem Ethylengehalt höher als 70 Gew.%;

wobei die Summe der Menge an a1) und a2), die als das Gesamtgewicht von a1) und a2) bezeichnet wird, 100 beträgt;
T2) 5 bis 30 Gew.% einer Polyolefinkomponente, welche folgendes enthält:

A) 5 bis 35 Gew.% eines Propylenhomopolymers oder eines Propylen-Ethylen-Copolymers, das 90 Gew.% oder mehr Propyleneinheiten enthält; wobei Komponente A) 10 Gew.% oder weniger von einer in Xylol bei

25 °C löslichen Fraktion ($XS_A$) enthält, wobei sowohl die Menge der Propyleneinheiten als auch die Fraktion $XS_A$ sich auf das Gewicht von A) beziehen;
B) 20 bis 50 Gew.% eines Copolymers von Ethylen und einem $C_3$- bis Cs-alpha-Olefin, welches 0,1 bis 20 Gew.% alpha-Olefineinheiten enthält und 25 Gew.% oder weniger von einer in Xylol bei 25 °C löslichen Fraktion ($XS_B$) enthält, wobei sowohl die Menge der alpha-Olefineinheiten als auch die Fraktion $XS_B$ sich auf das Gewicht von (B) beziehen; und
(C) 30 bis 60 Gew.% eines Copolymers von Ethylen und Propylen, das 25 Gew.% bis 75 Gew.% Ethyleneinheiten enthält und 40 Gew.% bis 95 Gew.% von einer in Xylol bei 25 °C löslichen Fraktion (XSc) enthält, wobei sich sowohl die Menge der Ethyleneinheiten als auch diejenige der Fraktion XSc auf das Gewicht von (C) beziehen;

wobei die Summe der Menge an (A), (B) und (C), die als das Gesamtgewicht von (A), (B) und (C) bezeichnet wird, 100 beträgt;
wobei die Summe der Menge an T1) und T2), die als das Gesamtgewicht von T1) und T2) bezeichnet wird, 100 beträgt.

**2.** Polyolefinzusammensetzungen nach Anspruch 1, wobei:

Komponente A im Bereich von 10 Gew.% bis 30 Gew.% liegt;
Komponente B im Bereich von 25 Gew.% bis 45 Gew.% liegt; und
Komponente C im Bereich von 35 Gew.% bis 55 Gew.% liegt.

**3.** Polyolefinzusammensetzungen nach den Ansprüchen 1 oder 2, wobei

Komponente A im Bereich von 15 Gew.% bis 25 Gew.% liegt;
Komponente B im Bereich von 30 Gew.% bis 40 Gew.% liegt; und
Komponente C im Bereich von 40 Gew.% bis 50 Gew.% liegt.

**4.** Polyolefinzusammensetzungen nach einem der Ansprüche 1 bis 3, wobei Komponente A) ein Polypropylenhomopolymer ist.

**5.** Polyolefinzusammensetzungen nach einem der Ansprüche 1 bis 4, wobei Komponente B) ein Copolymer von Ethylen und einem $C_3$- bis $C_8$-alpha-Olefin ist, das 5 bis 15 Gew.% alpha-Olefineinheiten enthält.

**6.** Polyolefinzusammensetzungen nach einem der Ansprüche 1 bis 5, wobei Komponente C) ein Copolymer von Ethylen und Propylen ist, das 37 bis 65 Gew.% Ethyleneinheiten enthält.

**7.** Polyolefinzusammensetzungen nach einem der Ansprüche 1 bis 6, wobei Komponente (A) eine Schmelzflussrate (230 °C/2,16 kg) im Bereich von 50 bis 200 g/10 min aufweist.

**8.** Polyolefinzusammensetzungen nach einem der Ansprüche 1 bis 7, wobei Komponente (B) eine Schmelzflussrate (230 °C/2,16 kg) im Bereich von 0,1 bis 70 g/10 min aufweist.

**9.** Polyolefinzusammensetzungen nach einem der Ansprüche 1 bis 8, wobei die Polyolefinzusammensetzung eine Schmelzflussrate (230 °C/2,16 kg) von 0,5 bis 25 g/10 min aufweist.

**10.** Polyolefinzusammensetzungen nach einem der Ansprüche 1 bis 9, wobei Komponente a1) im Bereich von 45 Gew.% bis 55 Gew.% liegt und Komponente a2) im Bereich von 40 Gew.% bis 60 Gew.% liegt.

**11.** Polyolefinzusammensetzungen nach einem der Ansprüche 1 bis 10, wobei Komponente T1) eine Mischung aus recyceltem Polypropylen und Polyethylengemisch ist.

**12.** Polyolefinzusammensetzungen nach einem der Ansprüche 1 bis 11, wobei Komponente a1) Propylenhomopolymer ist, das 0 bis 5 Gew.% Comonomere enthält, die von Olefin abgeleitete Einheiten sind.

**13.** Polyolefinzusammensetzungen nach einem der Ansprüche 1 bis 12, wobei a2) ein Ethylenhomo- oder -copolymer ist, das 0 bis 20 Gew.% Comonomere enthält, die von Olefin abgeleitete Einheiten sind.

**14.** Folie, umfassend die Polyolefinzusammensetzungen der Ansprüche 1 bis 13.

**15.** Folie nach Anspruch 14, die eine ein- oder mehrschichtige Gießfolie, Blasfolie oder biorientierte Folie ist.

## Revendications

**1.** Composition polyoléfinique comprenant :

T1) 70-95 % en poids d'un constituant polyoléfinique contenant :

a1) 30 % en poids à 70 % en poids d'un polymère à base de propylène présentant une teneur en propylène supérieure à 60 % en poids ;
a2) 30 % en poids à 70 % en poids d'un polymère à base d'éthylène présentant une teneur en éthylène supérieure à 70 ;

la somme de la quantité de a1) et de a2), se rapportant au poids total de a1) et de a2), valant 100 ;
T2) 5-30 % en poids d'un constituant polyoléfinique contenant :

A) 5-35 % en poids d'un homopolymère de propylène ou d'un copolymère de propylène-éthylène contenant 90 % en poids ou plus de motifs de propylène ; le constituant A) contenant 10 % en poids ou moins d'une fraction soluble dans le xylène à 25°C ($XS_A$), à la fois la quantité de motifs de propylène et de la fraction $XS_A$ se rapportant au poids de A) ;
B) 20-50 % en poids d'un copolymère d'éthylène et d'une alpha-oléfine en $C_3$-$C_8$ contenant 0,1 % à 20 % en poids de motifs d'alpha-oléfine et contenant 25 % en poids ou moins d'une fraction soluble dans le xylène à 25°C ($XS_B$), à la fois la quantité de motifs d'alpha-oléfine et de la fraction $XS_B$ se rapportant au poids de (B) ; et
C) 30 à 60 % en poids d'un copolymère d'éthylène et de propylène contenant 25 % à 75 % en poids de motifs d'éthylène et contenant 40 % à 95 % en poids d'une fraction soluble dans le xylène à 25°C (XSc), à la fois la quantité de motifs d'éthylène et de la fraction XSc se rapportant au poids de (C) ;

la somme des quantités de (A), (B) et (C), se rapportant au poids total de (A), (B) et (C), valant 100 ;
la somme de la quantité de T1) et de T2), se rapportant au poids total de T1) et de T2), valant 100.

**2.** Compositions polyoléfiniques selon la revendication 1,

le constituant A se situant dans la plage de 10 % en poids à 30 % en poids ;
le constituant B se situant dans la plage de 25 % en poids à 45 % en poids ; et
le constituant C se situant dans la plage de 35 % en poids à 55 % en poids.

**3.** Compositions polyoléfiniques selon les revendications 1 ou 2,

le constituant A se situant dans la plage de 15 % en poids à 25 % en poids ;
le constituant B se situant dans la plage de 30 % en poids à 40 % en poids ; et
le constituant C se situant dans la plage de 40 % en poids à 50 % en poids.

**4.** Compositions polyoléfiniques selon l'une quelconque des revendications 1 à 3, le constituant A) étant un homopolymère de polypropylène.

**5.** Compositions polyoléfiniques selon l'une quelconque des revendications 1 à 4, le constituant B) étant un copolymère d'éthylène et d'une alpha-oléfine en $C_3$-$C_8$ contenant 5 % à 15 % en poids de motifs d'alpha-oléfine.

**6.** Compositions polyoléfiniques selon l'une quelconque des revendications 1 à 5, le constituant C) étant un copolymère d'éthylène et de propylène contenant 37 % à 65 % en poids de motifs d'éthylène.

**7.** Compositions polyoléfiniques selon l'une quelconque des revendications 1 à 6, le constituant (A) présentant un indice de fluidité à chaud (230°C/2,16 kg) situé dans la plage de 50 à 200 g/10 min.

**8.** Compositions polyoléfiniques selon l'une quelconque des revendications 1 à 7, le constituant (B) présentant un indice de fluidité à chaud (230°C/2,16 kg) situé dans la plage de 0,1 à 70 g/10 min.

**9.** Compositions polyoléfiniques selon l'une quelconque des revendications 1 à 8, la composition polyoléfinique présentant un indice de fluidité à chaud (230°C/2,16 kg) compris entre 0,5 et 25 g/10 min.

**10.** Compositions polyoléfiniques selon l'une quelconque des revendications 1 à 9, le constituant a1) se situant dans la plage de 45 % en poids à 55 % en poids et le constituant a2) dans la plage de 40 % en poids à 60 % en poids.

**11.** Compositions polyoléfiniques selon l'une quelconque des revendications 1 à 10, le constituant T1) étant un mélange d'alliage de polypropylène recyclé et de polyéthylène.

**12.** Compositions polyoléfiniques selon l'une quelconque des revendications 1 à 11, le constituant a1) étant un homopolymère de propylène contenant 0 à 5 % en poids de comonomères qui sont des motifs dérivés d'oléfine.

**13.** Compositions polyoléfiniques selon l'une quelconque des revendications 1 à 12, a2) étant un homopolymère ou un copolymère d'éthylène contenant 0 à 20 % en poids de comonomères qui sont des motifs dérivés d'oléfine.

**14.** Film comprenant les compositions polyoléfiniques selon les revendications 1 à 13.

**15.** Film selon la revendication 14, qui est un film coulé, soufflé ou biorienté, monocouche ou multicouche.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013075241 A1
- US 4399054 A
- EP 45977 A
- EP 361493 A
- EP 728769 A


### Non-patent literature cited in the description


- **WEI ZHU et al.** *Journal of Applied Polymer Science,* 1995, vol. 58, 515-521
- **HUGGINS, M.L.** *J. Am. Chem. Soc.,* 1942, vol. 64, 2716
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride- diethylaluminum chloride. *Macromolecules,* 1982, vol. 15, 1150